# EUROPEAN PATENT APPLICATION

(11) **EP 2 228 245 A1**
(43) Date of publication of application: **15.09.2010**
(21) Application number: 09425105.5
(22) Date of filing: 13.03.2009
(51) Int. Cl.: B60J 1/16, B60J 1/18

(54) **Slideable window**

(71) Applicant: Pilkington Italia S.p.A., 66050 San Salvo (CH) (IT)
(72) Inventor: Modolo, Giuseppe, 10152 Torino (IT)
(74) Representative: Pettet, Nicholas Edward

(57) **Abstract**

A vehicle sliding window assembly (1) is disclosed. The assembly comprises a sliding glazed panel (3) mounted flush with respect to a fixed glazed panel (2) by means of at least one mounting rail (5,6). The sliding glazed panel (3) is free to articulate out of the plane of the fixed glazed panel (2) and to slide along at least part of the length of the mounting rail (5,6). The window assembly further comprises a securing mechanism having a toothed rail (10) located on the mounting rail (5,6) and at least one cam mechanism (12), the cam mechanism (12) having a toothed region adapted to engage with the toothed rail (10) and being pivotally mounted on the sliding glazed panel (3) to rotate freely. The toothed region of the cam can engage with the toothed rail to hold the sliding glazed panel firm and can disengage from the toothed rail to enable the sliding glazed panel to slide freely along the mounting rail.

## Description

The present invention relates to a slideable window for a vehicle, in particular, a horizontally slideable window, having a moveable portion lying flush with a fixed glazed panel.

Openable side windows are often provided in large vehicles, such as buses, trams and trains, to enable both passengers and the driver of the vehicle access to ventilation. Such windows typically comprise a fixed glazed panel and an opening glazed panel that is able to move relative to the fixed glazed panel, for example, by rotating or by sliding. The side windows adjacent the driver of a vehicle tend to be horizontally sliding windows, having a rectangular sliding glazed panel that moves relative to a fixed glazed panel held within a window frame on the vehicle body. The sliding glazed panel is mounted by means of two internally mounted rails, one upper rail and one lower rail, along which the window slides in a horizontal fashion courtesy of a sliding mechanism. These rails are fixed to the fixed glazed panel of the glazing, the vehicle bodywork or both. Stops are provided to limit the horizontal movement of the opening panel, and a locking mechanism is provided to lock the sliding glazed panel in position to keep the window closed. This locking mechanism is usually incorporated in a handle, which is used to open and close the window by releasing and locking the sliding glazed panel.

To prevent the exposure of the rails, the sliding mechanism and/or the sliding surfaces, in particular the lower rail, such that soiling is avoided, the window is typically mounted flush with the vehicle body, and the sliding glazed panel of the window to be flush with the surrounding fixed glazed panel when in its closed position. In order to open such windows, when the locking mechanism is released, the sliding glazed panel first articulates inwards, out of the plane of the fixed glazed panel of the window, and then slides along the internally mounted rails until it reaches a stop. Various methods of carrying out this articulation and sliding motion are known in the art, for example: use of a horizontal ramp, as described in EP 0 778 168; use of articulating mounts rotatable about a vertical axis, as described in EP 0 683 064; or the use of articulating mounts rotatable about a horizontal axis, as described in DE 103 01 584 and EP 0 857 844.

The extent to which the sliding glazed panel of a slideable window is free to move along its mounting rails is usually determined by a stop positioned at a point along the length of the mounting rail corresponding to the maximum opening desired. This prevents further movement of the sliding glazed panel even when the vehicle in which the window is fitted is in motion. However, it is also desirable to be able to provide a variable sized opening, for example to give a required level of ventilation that is stable whilst the vehicle is in motion. If the window unexpectedly flies opening or closes violently whilst the vehicle is in motion, there is a potential safety risk to the occupants of the vehicle. For example, if a vehicle stops suddenly, the sliding panel should remain in its opened position, and not move along the mounting rail in any direction. There is also the possibility that extremely violent motion of the sliding glazed panel could damage the sliding glazed panel and/or the fixed glazed panel.

There is a need therefore for a mechanism that allows the window to be opened a desired amount, which holds the sliding glazed panel securely in such a position, even when a vehicle is in motion or stops suddenly.

The present invention aims to address these problems by providing a vehicle sliding window assembly comprising a sliding glazed panel mounted flush with respect to a fixed glazed panel by means of at least one mounting rail, the sliding glazed panel being free to articulate out of the plane of the fixed glazed panel and to slide along at least part of the length of the mounting rail, the window assembly further comprising a securing mechanism having a toothed rail located on the mounting rail and at least one cam mechanism, the cam mechanism having a toothed region adapted to engage with the toothed rail and being pivotally mounted on the sliding glazed panel to rotate freely, such that the toothed region can engage with the toothed rail to hold the sliding glazed panel firm and can disengage from the toothed rail to enable the sliding glazed panel to slide freely along the mounting rail.

By providing a toothed rail securing mechanism it is possible to lock the sliding glazed panel in any open position easily and safely.

Preferably, a second cam mechanism is provided to engage with the toothed rail.

Preferably, the toothed rail is stepped. More preferably, the toothed rail comprises a stepped down portion at each end, corresponding to the position of at least the first cam mechanism when the sliding glazed panel is in the closed position. Ideally, the toothed rail comprises teeth that are generally pyramidal in shape.

Preferably, the at least one cam mechanism comprises a rocker, a first and a second wheel adapted to contact one the surface of the fixed glazed panel or the surface of the upper or lower mounting rail, and a toothed wheel adapted to engage the toothed rail.

Alternatively, the at least one cam mechanism may comprises a rocker, a first and a second portion adapted to contact one the surface of the fixed glazed panel or the surface of the upper or lower mounting rail, and a toothed wheel adapted to engage the toothed rail.

The at least one cam mechanism is preferably mounted on a cam shaft. More preferably, two cam shafts are provided, each parallel with a vertical edge of the sliding glazed panel.

Preferably, the two cam shafts are joined at a first end, adjacent the toothed rail, by a cam separating rail. Biasing means may be provided, mounted on the lower mounting rail, and in the vicinity of the cam separating rail.

The biasing means may act to maintain pressure on the at least one cam mechanism, forcing the at least one cam mechanism against the toothed rail.

Preferably, a cam mechanism is provided at each end of the two cam shafts.

Preferably, a handle is mounted on one of the cam shafts. More preferably, turning the handle clockwise causes the at least one cam mechanism to rotate clockwise, and turning the handle anti-clockwise causes the at least one cam mechanism to rotate anti-clockwise.

The present invention will now be described by way of example only, and with reference to the accompanying drawings, in which:
Figure 1 is a schematic elevation view of a slideable vehicle window in a closed position, viewed from outside a vehicle;
Figure 2 is a schematic part-side view of a securing mechanism in accordance with the present invention;
Figure 3 is a schematic elevation showing the position of the cam shafts and cam mechanisms relative to the sliding glazing panel;
Figure 4 is a schematic part-side view of the securing mechanism in accordance with the present invention at the point at which the sliding glazed panel starts to open;
Figure 5 is a schematic part-side view of the first cam mechanism at the point that the sliding glazed panel reaches a desired partially opened position;
Figure 6 is a schematic part-side view of the first cam mechanism at the point when the handle is rotated to release the toothed wheel from the teeth of the toothed rail to close the sliding glazed panel; and
Figure 7 is a schematic side view of an alternative cam mechanism for use with the securing mechanism of the present invention.

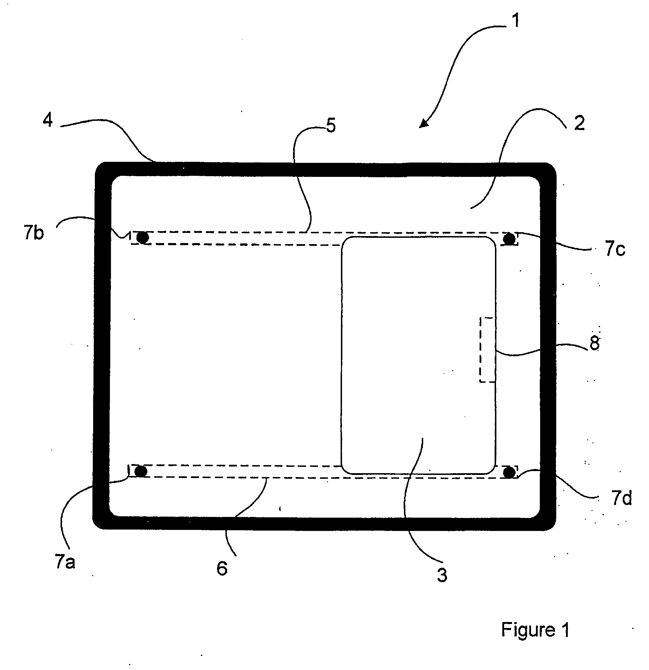

Figure 1 is a schematic elevation view of a slideable vehicle window in a closed position, viewed from, outside a vehicle. Such a window is typically used as the driver's window in a bus, coach, tram or train. The vehicle sliding window assembly 1 comprises a fixed glazed panel 2, which is mounted within a frame provided in the bodywork of a vehicle (not shown), and a sliding glazed panel 3, which fits within an aperture provided within the fixed glazed panel 1, and is and is mounted flush respect to the fixed glazed panel 2, such that when in a closed position, the sliding glazed panel 3 is completely flush with the fixed glazed panel 2. The fixed glazed panel 2 is itself flush with the vehicle body work (not shown) and sealed in place by a gasket 4. The sliding glazed panel 3 is mounted with respect to the fixed glazed panel 2 on upper 5 and lower 6 horizontal mounting rails (shown in dashed lines to indicate being viewed through the window). The sliding glazed panel 3 is free to articulate out of the plane of the fixed glazed panel 2, and to slide along at least part of the length of the horizontal mounting rails 5, 6. This sliding motion is achieved by two sliding mechanisms (not shown) one housed in the upper horizontal mounting rail 5 and one in lower horizontal mounting rail 6. The horizontal mounting rails 5, 6, may be formed of a thin sheet metal, such as aluminium, or from a plastic material, or a metallic alloy, such as stainless steel, and are fixed to the fixed glazed panel by bolts 7a, 7b, 7c, 7d passing through the fixed glazed panel. Alternatively, the upper 5 and lower 6 mounting rails may be mounted on the fixed panel by other means, such as adhesive, or on the vehicle body. A handle 8 is provided on the inside of the sliding glazed panel 3 on a frame 9 positioned around the periphery of the sliding glazed panel 3, enabling the opening portion to be articulated inwards and slid along the upper 5 and lower 6 horizontal mounting rails, by means of the sliding mechanism.

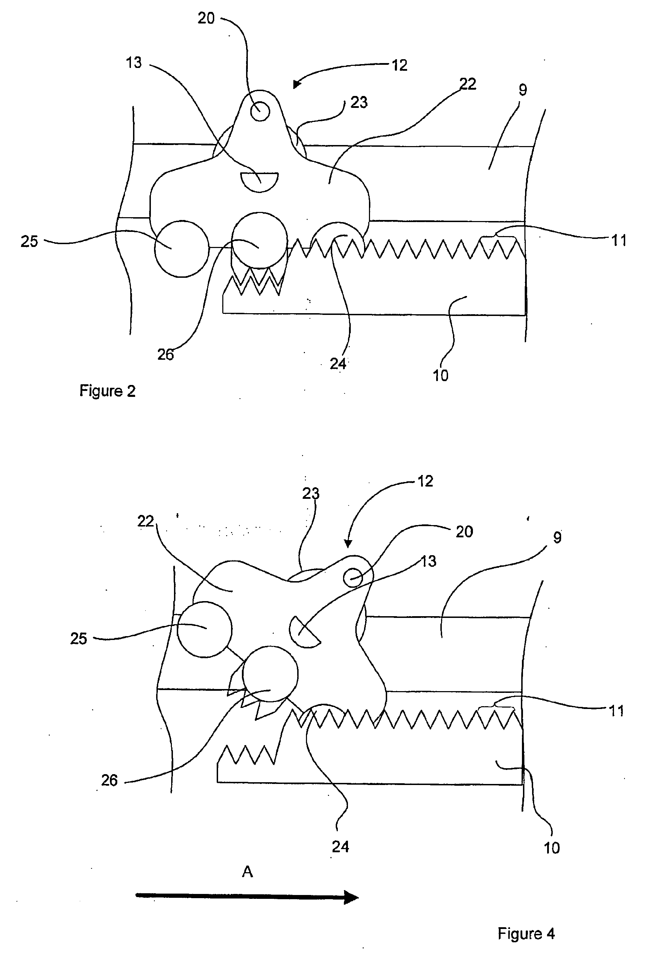

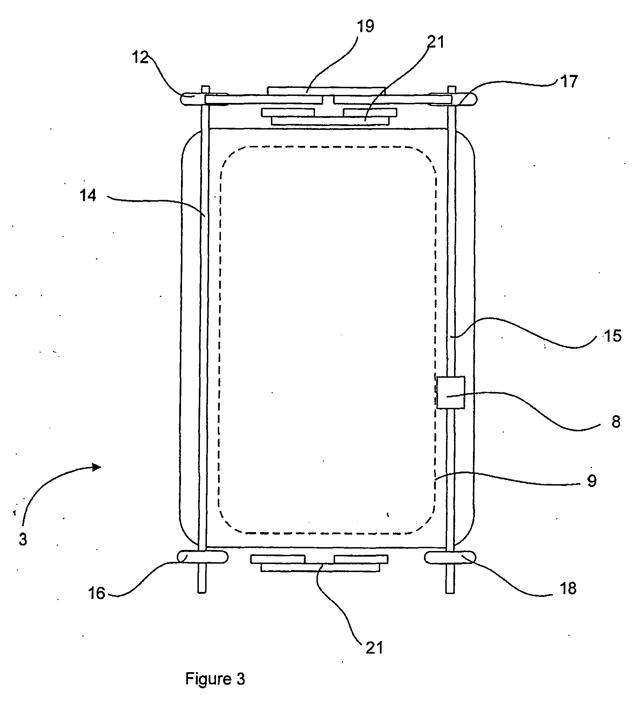

Figure 2 is a schematic part-side view of a securing mechanism in accordance with the present invention, when a slideable vehicle window is in a closed position. For clarity, the structure of the upper mounting rail 5 is omitted from the Figure. A toothed rail 10 is mounted within the upper sliding rail 5, extending along substantially the entire length of the sliding rail 5. The toothed rail 10 comprises a plurality of teeth 11, essentially pyramidal in shape, all along the length of the toothed rail 10. Each tooth 11 is approximately 10mm in height and 5mm across its base portion. A first cam mechanism 12 is mounted on the sliding glazed panel 3 at one of the corners adjacent the upper mounting rail 5. A second cam mechanism (not shown), the same in design and function as the first cam mechanism 12 is mounted at the opposite corner of the sliding glazed panel 3 adjacent the upper mounting rail 5. Each cam mechanism is mounted on a cam shaft (not shown) that passes through a cam receiving hole 13 in each cam mechanism. The cam shafts pass down the vertical edges of the sliding glazed panel 3, and into two further cam mechanisms, as shown in Figure 3.

Figure 3 is a schematic elevation showing the position of the cam shafts and cam mechanisms relative to the sliding glazing panel. The first 14 and second 15 cam shafts run parallel with the vertical edges of the sliding glazed panel 3, and are positioned underneath the frame 9 (the position of which is shown as a dotted line). The handle 8 is mounted on the first cam shaft 14. The first cam mechanism 12 is positioned at the upper end of the first cam shaft 14, with a third cam mechanism 16 being mounted at the lower end of the first cam shaft 14, adjacent the lower mounting rail 6. The second cam mechanism 17 is positioned at the upper end of the second cam shaft 15, with the fourth cam mechanism 18 being mounted at the lower end of the second cam shaft 15, adjacent the lower mounting rail 6. The third 16 and fourth 18 cam mechanisms are similar in design and function to the first 12 and second 17 cam mechanisms, but do not mesh with a toothed rail, as, in this example, none is provided along the bottom mounting rail 6. In the vicinity of the toothed rail 10, the first 14 and second 15 cam shafts are linked together by a cam shaft joining rail 19 that is joined to each cam at an attachment point 20. Each of the first 14 and second 15 cam shafts are provided with a flattened end that is inserted into the attachment point 20 of each cam mechanism 12, 16, 17, 18. In the vicinity of the lower mounting rail 6 and mounted on the lower mounting rail 6, biasing means 21 are provided. Additional biasing means 21 are also provided in the region of the cam shaft joining rail 19. The biasing means 21 act to maintain pressure on each of the cam mechanisms, forcing them against the toothed rail 10 (in the case of the first 12 and second 17 cam mechanisms) and the surface of the fixed glazing panel 2 (in the case of the third 16 and fourth 18 cam mechanisms). Turning the handle 8 clockwise causes the cam mechanism s 12, 16, 17, 18 to rotate clockwise, and turning the handle anti-clockwise causes the at least one cam mechanism to rotate anti-clockwise.

Figure 4 is a schematic part-side view of the securing mechanism in accordance with the present invention at the point at which the sliding glazed panel 3 starts to open. The toothed rail 10 is stepped: at each end there is a short length of a stepped down portion, corresponding to the position of the first 12 and second 16 cam mechanisms when the sliding glazed panel 3 is in the closed position, flush with the fixed glazed panel 2, and the position of the first cam mechanism 12 when the sliding glazed panel 3 is in its fully opened position. The majority of the toothed rail 10 is formed from a stepped up portion, raised above the surface of the fixed glazing panel 2 so that when the sliding glazed panel 3 has articulated out of the plane of the fixed glazed panel 2 to slide in its opened position, the first 12 and second cam mechanisms remain in contact with the toothed rail 10, as described below.

Returning to Figure 2, where the sliding glazed panel 3 is in the closed position, the first cam mechanism 12 comprises a rocker 22 mounted on the sliding glazed panel 3 by means of a pivot 23 attached to the frame 9 of the sliding glazed panel 3. The rocker 22 is substantially triangular in shape, with a first wheel 24 mounted to rotate freely at one apex of the base of the triangular rocker 22, and a second wheel 25 mounted to rotate freely at the other apex of the base of the triangular rocker 22. Each wheel 24, 25 is able to contact the inner surface of the fixed glazing panel 2 when the rocker 22 rocks in either a clockwise or an anti-clockwise direction about its pivot 23. The rocker 22 is also provided with a toothed wheel 26, fixed in position so as to engage with the teeth 11 on the toothed rail 10 when the sliding glazed panel 3 is in both its closed and fully opened positions, and in any position where the sliding glazed panel is partially open.

In Figure 4, the first cam mechanism is at the point when the handle 8 is rotated to articulate the sliding glazed panel 3 out of the plane of the fixed glazed panel 2. Rotating the handle 8 causes the rocker 21 to rotate about its pivot point in an anti-clockwise direction (when viewed towards the sliding glazed panel 3) by rotating the first 15 and second 16 cam shafts such that the first wheel 24 contacts the inner surface of the fixed glazed panel 2. Simultaneously, the second 17, third 16 and fourth 18 cam mechanisms rotate in the same manner as the first cam mechanism 12, moving the sliding glazed panel 3 out of the plane of the fixed glazed panel 2. At this point, the toothed wheel 26 disengages from the teeth 11 on the stepped down portion of the toothed rail 10. Once the first wheel 15 has contacted the inner surface of the fixed glazed panel 2, continued rotation of the handle causes the rocker 13 to continue to rotate, pushing the sliding glazed panel 3 away from the fixed glazed panel 2. Further rotation of the handle 8 is prevented once the sliding glazed panel 3 is fully articulated.

With the handle 8 maintained in its rotated position, the first wheel 24 remains in contact with the inner surface of the fixed glazed panel 2. As a force is applied to slide the sliding glazed panel 3 along the mounting rails 5, 6 the toothed wheel 26 remains held away from the toothed rail, such that it cannot engage with the teeth 11 on the toothed rail. Pulling the handle 8 in the direction indicated by arrow A causes the sliding glazed portion to slide in the same direction.

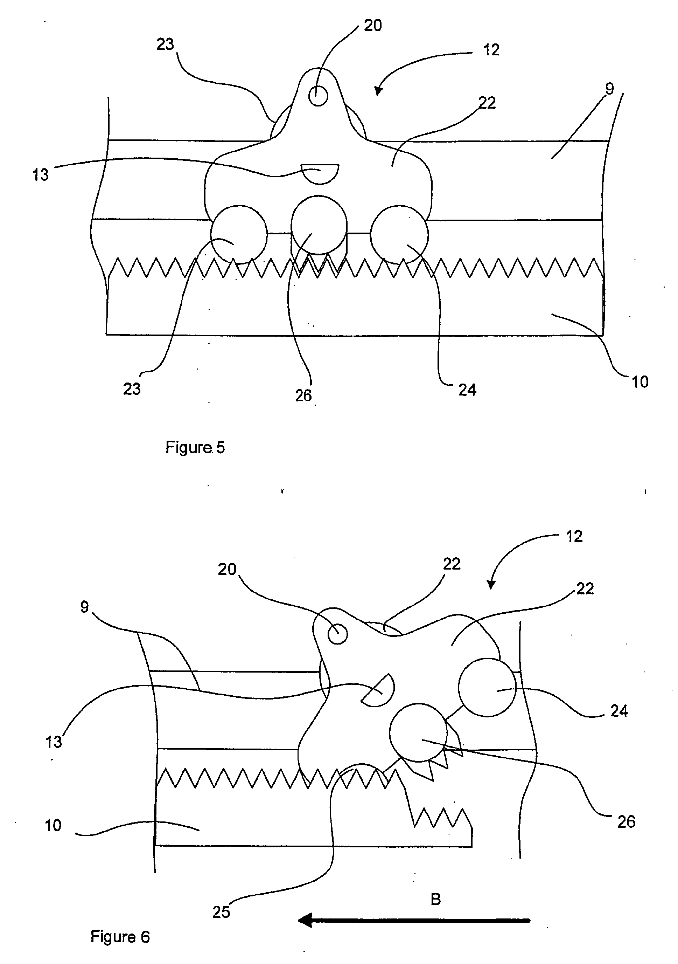

Figure 5 is a schematic part-side view of the first cam mechanism 12 at the point that the sliding glazed panel 3 reaches a desired partially opened position. Once the sliding glazed panel 3 is in a desired position, the handle 8 is released. This causes the rocker 21 to rotate about the pivot 14 back to its original position, lifting the first wheel 15 away from the inner surface of the fixed glazed panel 2. As the rocker 22 rotates, the toothed wheel 26 engages with the teeth 11 in the stepped up portion of the toothed rail 10. This effectively locks the sliding glazed panel 3 in the partially open position, so that even with the vehicle in which the window 1 is fitted in motion, either at a constant speed or if stopped suddenly, the sliding glazed panel 3 is held in the partially open position with no risk of sudden movement causing the sliding glazed panel 3 to slam fully open or closed. From this partially opened position, the sliding glazed panel 3 can be opened further, by rotating the handle as before, or closed. With the sliding glazed panel in this partially opened position, the toothed wheel of the second cam mechanism does not engage with any part of the toothed rail 10. Following the initial articulation of the sliding glazed panel 3, the second cam mechanism is provided to maintain the sliding glazed panel 3 parallel with the fixed glazed panel 2.

Figure 6 is a schematic part-side view of the first cam mechanism at the point when the handle 8 is rotated to release the toothed wheel 26 from the teeth 11 of the toothed rail 10 to close the sliding glazed panel 3. In order to close the sliding glazed panel 3, the handle 8 is rotated in the opposite direction to that when the sliding fixed panel 3 was opened. This rotation causes the rocker 21 to rotate about its pivot point in a clockwise direction (when viewed towards the sliding glazed panel 3) such that the second wheel 25 contacts the inner surface of the fixed glazed panel 2. Simultaneously, the second 17, third 16 and fourth 18 cam mechanisms rotate in the same manner as the first cam mechanism 12, moving the sliding glazed panel 3 out of the plane of the fixed glazed panel 2. At this point, the toothed wheel 26 disengages from the teeth 11 on the stepped up portion of the toothed rail 10. With the handle 8 maintained in its rotated position, the second wheel 25 remains in contact with the inner surface of the fixed glazed panel 2. As a force is applied to slide the sliding glazed panel 3 along the mounting rails 5, 6 the toothed wheel 26 remains held away from the toothed rail, such that it cannot engage with the teeth 11 on the toothed rail. Pulling the handle 8 in the direction indicated by arrow B causes the sliding glazed portion to slide in the same direction. Once the sliding glazed panel 3 reaches the position at which it can articulate back into the plane of the fixed glazed panel 2, the handle 8 is released. This moves the second wheel 25 away from the inner surface of the fixed glazed panel 2, and allows the toothed wheel 26 to engage with the teeth 11 on the stepped down portion of the toothed rail 10, bringing the first can mechanism 12 back into the position illustrated in Figure 2.

Preferably, the cam mechanisms 12, 16, 17, 18 and the toothed rail 10 may be formed from a hard plastics material, such as polypropylene, or may be a metal, such as aluminium, or a metallic alloy, such as stainless steel. The securing mechanism may be used with windows where at least one of the sliding glazed panel and the fixed glazed panel is formed from single ply of toughened glass or from laminated glass (generally comprising two plies of annealed, semi-toughened or toughened float glass laminated together using a ply of an interlayer material such as poly vinyl butyral) or from a double-glazed unit, comprising two plies of glass spaced apart to form a cavity filled by a gas, such as air or argon. Although the securing mechanism is shown in use with a horizontally sliding flush window, it may be applied to a vertically sliding flush window, where the rails are mounted vertically for sliding movement of a sliding glazed panel in an up and down manner, rather than a side-to-side manner. In addition, the clockwise and anti-clockwise movement of the handle 8 may be used to open and close or close and open the sliding glazed window 3, respectively. Alternatively, it may be desirable that the handle 8 is only able to rotate in one direction, for example, only in a clockwise direction or only in an anti-clockwise direction. Although the glazing described above is a so-called flush glazing, the glazing need not be flush with the vehicle body, nor need the sliding glazed panel and the fixed panel be flush when the sliding glazed panel is in the closed position.

The toothed rail 10 may be located in the lower mounting rail 6, or a toothed rail may be located in each of the upper 5 and lower 6 mounting rails, as desired. As a further alternative, it may be desirable for the first 24 and second 25 wheels to contact the inside of the upper 5 and lower 6 mounting rails respectively, rather than forming a direct contact on the inner surface of the fixed glazed panel 2.

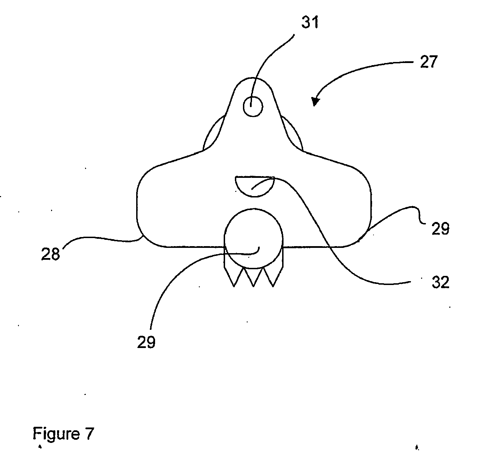

Figure 7 is a schematic side view of an alternative cam mechanism for use with the securing mechanism of the present invention. The cam mechanism 27 differs from the cam mechanism 12, 16, 17, 18, shown in Figures 2, 4, 5 and 6 above in that although it is generally triangular in shape, it is not provided with any form of wheel means for contacting either the inner surface of the fixed glazed panel 2 or the inner surface of the upper 5 or lower 6 mounting rails. Instead, the two lower corners 28, 29 of the cam mechanism 27 are portions adapted to contact whichever surface they are in contact with (fixed glazed panel 2 or upper 5/lower 6 mounting rail) as the sliding glazed panel 3 is moved, such that the cam mechanism 27 gently slides along. A toothed wheel 30 is provided to engage with the toothed rail 10, as well as an attachment point 31 for a cam shaft mounting rail (not shown) and also a cam shaft receiving hole 32. This simplifies the design of the cam mechanism, and also reduces the overall cost. As with the cam mechanism 12, 16, 17, 18 described above, this alternative cam mechanism 27 may be formed from a hard plastics material, such as polypropylene, or may be a metal, such as aluminium, or a metallic alloy, such as stainless steel.

## Claims

1. Vehicle sliding window assembly comprising a sliding glazed panel mounted flush with respect to a fixed glazed panel by means of at least one mounting rail, the sliding glazed panel being free to articulate out of the plane of the fixed glazed panel and to slide along at least part of the length of the mounting rail, the window assembly further comprising a securing mechanism having a toothed rail located on the mounting rail and at least one cam mechanism, the cam mechanism having a toothed region adapted to engage with the toothed rail and being pivotally mounted on the sliding glazed panel to rotate freely, such that the toothed region can engage with the toothed rail to hold the sliding glazed panel firm and can disengage from the toothed rail to enable the sliding glazed panel to slide freely along the mounting rail.

2. Vehicle sliding window assembly according to claim 1, wherein a second cam mechanism is provided to engage with the toothed rail.

3. Vehicle sliding window assembly according to claim 1 or 2, wherein the toothed rail is stepped.

4. Vehicle sliding window assembly according to claim 3, wherein the toothed rail comprises a stepped down portion at each end, corresponding to the position of at least the first cam mechanism when the sliding glazed panel is in the closed position.

5. Vehicle sliding window assembly according to any preceding claim, wherein the toothed rail comprises teeth that are generally pyramidal in shape.

6. Vehicle sliding window assembly according to any preceding claim, wherein the at least one cam mechanism comprises a rocker, a first and a second wheel adapted to contact one the surface of the fixed glazed panel or the surface of the upper or lower mounting rail, and a toothed wheel adapted to engage the toothed rail.

7. Vehicle sliding window assembly according to any of claims 1 to 5, wherein the at least one cam mechanism comprises a rocker, a first and a second portion adapted to contact one the surface of the fixed glazed panel or the surface of the upper or lower mounting rail, and a toothed wheel adapted to engage the toothed rail.

8. Vehicle sliding window assembly according to any preceding claim, wherein the at least one cam mechanism is mounted on a cam shaft.

9. Vehicle sliding window assembly according to claim 8, wherein two cam shafts are provided, each parallel with a vertical edge of the sliding glazed panel.

10. Vehicle sliding window assembly according to claim 9, wherein the two cam shafts are joined at a first end, adjacent the toothed rail, by a cam separating rail.

11. Vehicle sliding window assembly according to claim 10, wherein biasing means are provided, mounted on the lower mounting rail, and in the vicinity of the cam separating rail.

12. Vehicle sliding window assembly according to claim 10 or 11, wherein the biasing means act to maintain pressure on the at least one cam mechanism, forcing the at least one cam mechanism against the toothed rail.

13. Vehicle sliding window assembly according to any of claims 8 to 12, wherein a cam mechanism is provided at each end of the two cam shafts.

14. Vehicle sliding window assembly according to any of claims 8 to 13, wherein a handle is mounted on one of the cam shafts.

15. Vehicle sliding window assembly according to claim 14, wherein turning the handle clockwise causes the at least one cam mechanism to rotate clockwise, and turning the handle anti-clockwise causes the at least one cam mechanism to rotate anti-clockwise.
